**Europäisches Patentamt**

**European Patent Office**

**Office européen des brevets**

(19)

(11) Veröffentlichungsnummer: **0 345 537 B1**

# (12) EUROPÄISCHE PATENTSCHRIFT

(45) Veröffentlichungstag der Patentschrift:
08.01.92 Patentblatt 92/02

(51) Int. Cl.$^5$: **F16D 43/20, F16F 1/34**

(21) Anmeldenummer: **89109361.9**

(22) Anmeldetag: **24.05.89**

(54) Freischaltsicherheitskupplung für die Übertragung von Drehbewegungen zwischen Wellen.

(30) Priorität: **08.06.88 DE 3819481**

(43) Veröffentlichungstag der Anmeldung:
**13.12.89 Patentblatt 89/50**

(45) Bekanntmachung des Hinweises auf die
Patenterteilung:
**08.01.92 Patentblatt 92/02**

(84) Benannte Vertragsstaaten:
**AT BE CH DE ES FR GB GR IT LI LU NL SE**

(56) Entgegenhaltungen:
**CH-A- 395 651
DE-C- 896 277
US-A- 1 512 760
US-A- 3 261 598**

(73) Patentinhaber: **ATEC-Weiss KG
Von-Siemens-Strasse 1
W-4426 Vreden (DE)**

(72) Erfinder: **Weiss, Hermann
Eibergener Strasse 18
W-4426 Vreden (DE)**
Erfinder: **Weiss, Rudolf
Händelstrasse 13
W-4426 Vreden (DE)**

(74) Vertreter: **Patentanwaltsbüro Cohausz &
Florack
Schumannstrasse 97
W-4000 Düsseldorf 1 (DE)**

## Beschreibung

Die Erfindung betrifft eine Freischaltsicherheitskupplung für die Übertragung von Drehbewegungen zwischen Wellen mit zwei von einer Nabe getragenen axial ausrückbaren Kupplungshälften, von denen eine Kupplungshälfte drehstarr mit der Nabe und eine Kupplungshälfte axial fest mit der Nabe verbunden sind, und mit einer auf die axial bewegliche Kupplungshälfte einwirkenden Federanordnung mit Umschnappcharakteristik, die die axial bewegliche Kupplungshälfte im eingerückten Zustand mit einer einstellbaren Axialkraft beaufschlagt, wobei die Federanordnung aus einem mit der axial beweglichen Kupplungshälfte verbundenen konzentrischen Ring und an diesem Ring und der mit radialem Abstand innerhalb dieses Ringes angeordneten Nabe gelenkig abgestützten und geneigt zur Axialebene der Kupplung angeordneten, radial gerichteten starren Abstützelementen besteht.

Bei einer bekannten Freischaltsicherheitskupplung erfolgt die Übertragung des Drehmomentes von der angetriebenen Welle und der mit ihr verbundenen Nabe bzw. die andere Kupplungshälfte mittels einer formschlüssigen Verbindung auf die eine Kupplungshälfte, die ihrerseits mit dem Abtrieb verbunden ist. Bei Überlast bewirken die formschlüssig ineinandergreifenden Elemente der Verbindung zwischen den Kupplungshälften, die z.B. als Stirnzahnradverbindung ausgeführt sein kann, eine axiale Bewegung der anderen Kupplungshälfte gegenüber der axial festgelegten einen Kupplungshälfte, wobei zusätzlich auch eine Relativbewegung der Kupplungshälften in Umfangsrichtung erfolgt. Der Axialbewegung der anderen Kupplungshälfte entgegen wirkt die Kraft einer Tellerfeder, deren Kennlinie so eingestellt ist, daß die Feder zwei stabile axiale Lagen einnehmen kann, wobei der Übergang von der einen stabilen Lage in die andere bei Überschreiten des Umschnappunktes auf der Federkennlinie erfolgt. Wenn die Federanordnung nach Überschreiten des Umschnappunktes ihre andere stabile Lage einnimmt, sind die beiden Kupplungshälften dauernd von einander getrennt. Beim Stand der Technik, bei dem die Federanordnung durch zwei Tellerfedern gebildet ist, wird die geeignete axiale Vorspannkraft der Federanordnung mittels einer Ausrückfeder eingestellt, die über eine axial verstellbare Hülse einstellbar ist. Konstruktiv ist diese bekannte Federanordnung jedoch verhältnismäßig aufwendig, da zur Gewährleistung einer sicheren Funktion neben den Tellerfedern noch verschiedene andere Konstruktionselemente, beispielsweise ein Distanzring zwischen den Tellerfedern oder ein Sicherungsring erforderlich sind.

Der konstruktive Aufwand ist bei einer bekannten Freischaltsicherheitskupplung bereits wesentlich geringer (DE-2821079 A1 ; US-PS 4,004,667). Bei dieser Kupplung bestehen die Abstützelemente aus Federblättern oder einem Lamellenfederpaket, die bzw. das zwischen einer starren Abstützung an der Nabe und einem starren konzentrischen Ring eingespannt sind bzw. ist. Um die Kupplung umzuschalten, müssen sich diese Elemente verformen, indem sie unter radialer Stauchung aus der vorgespannten Lage auf der einen Seite der neutralen Ebene in eine vorgespannte Lage auf der anderen Seite der neutralen Ebene gebracht werden. Eine solche Beanspruchung ist hinsichtlich der Standzeit der Federblätter nicht optimal. Im übrigen sind solche Konstruktionen allenfalls für große Durchmesser und die Übertragung verhältnismäßig kleiner Drehmomente geeignet.

Eine Freischaltsicherheitskupplung der eingangs genannten Art ist aus der US 1512760 bekannt. Bei dieser Kupplung laufen im Normalbetrieb die Kupplungshälften synchron zueinander. Nimmt das zu übertragende Moment zu, führt dies zu einer relativen Verdrehung der Kupplungshälften zueinander, woraufhin eine der Kupplungshälften entlang der Steigung einer Flanke axial verschoben wird. Dieser Bewegung wirkt zunächst die Druckkraft von federbeaufschlagten Druckblöcken in Sockeln entgegen, bis Abstützelemente eine in etwa radial gerichtete Position eingenommen haben. Bei weiterer Axialbeaufschlagung schnappt das Kupplungsteil über, indem die federbeaufschlagten Blöcke die Abstützelemente in eine Position bringen, in der die Kupplungshälften gegeneinander ausgerückt sind. Bei dieser bekannten Kupplung müssen die federbeaufschlagten Druckblöcke die gesamte Axialkraft aufnehmen. Dies führt insbesondere bei hohen Axialkräften zu einer Überlastung der Kupplung. Zum anderen ist die bekannte Kupplung kompliziert aufgebaut, da sie im Bezug auf die den Umschnappeffekt bewirkenden Bauteile eine Vielzahl von Elementen umfaßt.

Demgegenüber liegt der Erfindung die Aufgabe zugrunde, eine Freischaltsicherheitskupplung der eingangs genannten Art zu schaffen, die in konstruktiver Hinsicht einfach und robust ist.

Diese Aufgabe wird erfindungsgemäß bei einer Freischaltsicherheitskupplung der eingangs genannten Art dadurch gelöst, daß der Ring derart federelastisch ist, daß bei Beaufschlagung mit einer gegen die Neigungsrichtung der Abstützelemente gerichteten Axialkraft radial aufweitbar ist.

Wenn der Ring einstückig mit der anderen Kupplungshälfte ausgebildet ist, ergibt sich eine konstruktiv besonders einfache Ausführungsform, wodurch insbesondere der Zusammenbau der Kupplung erleichtert wird.

Bevorzugt wird die radiale Aufweitbarkeit des Ringes dadurch erreicht, daß der Ring mindestens einen von seinem der Verbindung abgewandten Ende ausgehenden axialen Schlitz aufweist. Durch die Dimensionierung des Schlitzes bzw. der Schlitze läßt sich die Federkennlinie entsprechend dem Überlastmoment, auf das die Kupplungsanordnung ausgelegt wird, einstellen.

Wenn der Ring aus zwei zueinander konzentrischen und gegeneinander verdrehbaren jeweils einen axialen Schlitz aufweisenden Teilringen besteht, wobei die beiden Schlitze umfangsmäßig gegeneinander versetzt sind, ergibt sich eine hinsichtlich ihrer Zuverlässigkeit zu bevorzugende Ausführungsform. Hierbei ist es aus Gründen der Symmetrie von Vorteil, wenn sich die Schlitze der beiden Teilringe diametral gegenüberliegen. Zur Erhöhung der Funktionssicherheit der Kupplung ist es dabei von Vorteil, wenn der zwischen den Teilringen ausgebildete Ringraum durch ein Gleitmittel, insbesondere aus Kunststoff, ausgefüllt ist. Hierdurch wird die Reibung zwischen beiden Teilringen im Überlastfall herabgesetzt.

Die gelenkige Abstützung der Abstützelemente wird bevorzugt von einem auf der Nabe angeordneten Innenring gebildet. Hierin sind die einzelnen umfangsmäßig getrennt ausgeführten Abstützelemente gelagert, die im Überlastfall die Aufweitung des federelastischen Ringes bewirken. Eine solche Ausführung dient ebenso dem erleichterten Zusammenbau der Kupplung.

Dadurch, daß der Innenring eine Schulter aufweist, die mit einem Absatz der anderen Kupplungshälfte derart zusammenwirkt, daß der maximal zulässige Ausrückweg der anderen Kupplungshälte auf einen Punkt zwischen dem Umschnappunkt der Federanordnung und der stabilen ausgerückten Axiallage der anderen Kupplungshälfte begrenzt ist, wird beim Wiedereinschalten der Kupplung nach ihrem Ansprechen auf Überlast eine wesentlich geringere Kraft benötigt.

Die Erfindung wird im folgenden anhand einer Ausführungsbeispiele darstellenden Zeichnung näher erläutert. Dabei zeigen

Figur 1    ein erstes Ausführungsbeispiel der erfindungsgemäßen Kupplung, wobei in der oberen Zeichnungshälfte der eingerückte und in der unteren Hälfte der ausgerückte Zustand der Kupplung dargestellt ist.

Figur 2    die Federkennlinie im ersten Ausführungsbeispiel nach Figur 1,

Figur 3    ein zweites Ausführungsbeispiel der Erfindung, wobei der obere Teil im Axialschnitt dargestellt ist und im unteren Teil eine umfängliche Abwicklung eines Teiles der Kupplung zu sehen ist,

Figur 4    die Federkennlinie im zweiten Ausführungsbeispiel nach Figur 3,

Figur 5    ein drittes Ausführungsbeispiel im Teilquerschnitt und

Figur 6    das dritte Ausführungsbeispiel im Schnitt entlang der Linie AA in Figur 5.

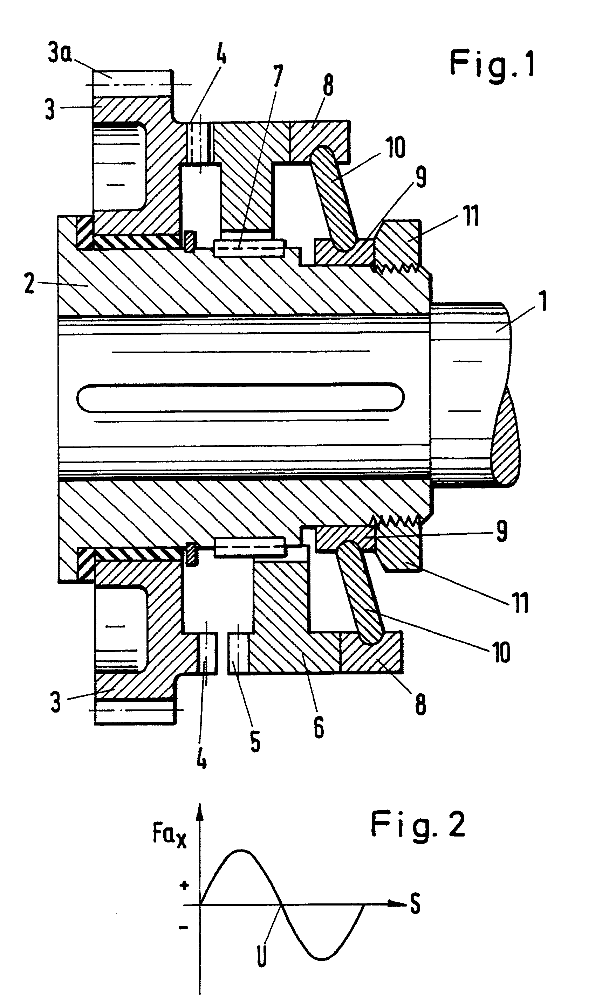

Unter Bezugnahme auf Figur 1 ist auf der angetriebenen Welle 1 eine Nabe 2 angeordnet. Eine erste Kupplungshälfte 3 ist axial gesichert aber drehbeweglich auf der Nabe 2 angeordnet. Eine andere Kupplungshälfte 6 ist mittels einer Paßfeder 7 mit der Nabe 2 drehstarr verbunden. Jedoch ist die andere Kupplungshälfte axial beweglich. Die eine Kupplungshälfte 3 trägt auf ihrer Umfangsseite eine Verzahnung 3a, mittels der das zu übertragende Drehmoment auf einen nicht dargestellten Abtrieb weitergeleitet wird. Beide Kupplungshälften 3, 6 sind über formschlüssig ineinandergreifende Planverzahnungen 4, 5 miteinander gekuppelt. Die Stirnverzahnungen 4 und 5 werden über eine Federanordnung in der im oberen Teil der Figur 1 dargestellten Lage festgehalten. Die Federanordnung besteht aus einem Ring 8, Abstützelementen 10 und einem Innenring 9 sowie einer Einstellmutter 11. Das Abstützelement 10 ist gelenkig in einer Kehle des Innenringes 9 gelagert, welcher axial verschieblich auf der Nabe sitzt. Andererseits ist das Abstützelement in einer weiteren Kehle des Ringes 8 ebenfalls gelenkig gelagert. Der Ring 8 weist eine Federsteifigkeit auf, so daß er bei Beaufschlagung mit einer radial gerichteten Kraft durch das Abstützelement 10 aufweitbar ist. Im Falle einer Überlast erfolgt eine umfängliche Relativbewegung beider Kupplungshälften 3, 6 derart gegeneinander, daß durch die Profile der Stirnverzahnungen 4, 5 die andere Kupplungshälfte 6 von der ersten Kupplungshälfte 3 axial weggedrückt wird. Die Axialbewegung erfolgt entgegen der Neigungsrichtung der Abstützelemente 10, wobei mit zunehmender Aufrichtung der Abstützelemente 10 der Ring 8 aufgeweitet wird. Wie die Federkennlinie der erfindungsgemäßen Kupplungsanordnung, die in Figur 2 dargestellt ist, zeigt erfolgt bei einer geringen axialen Verschiebung S zunächst eine Zunahme der axialen Gegenkraft Fa, die durch die Federanordnung 8, 9, 10, 11 erzeugt wird, während beim Erreichen des Überschnappunktes U auf der Federkennlinie die Federanordnung umschnappt und in die dargestellte axial ausgerückte Lage kommt. Der axiale Weg S, bei dem das Umschnappen erfolgt, wird durch die Vorspannkraft der Einstellmutter 11 justiert. Beispielsweise hierdurch kann die Freischaltsicherheitskupplung an unterschiedliche Überlastmomente angepaßt werden. Dieser Umschnappunkt ist außerdem von der Dimensionierung des radial aufweitbaren Ringes 8 abhängig.

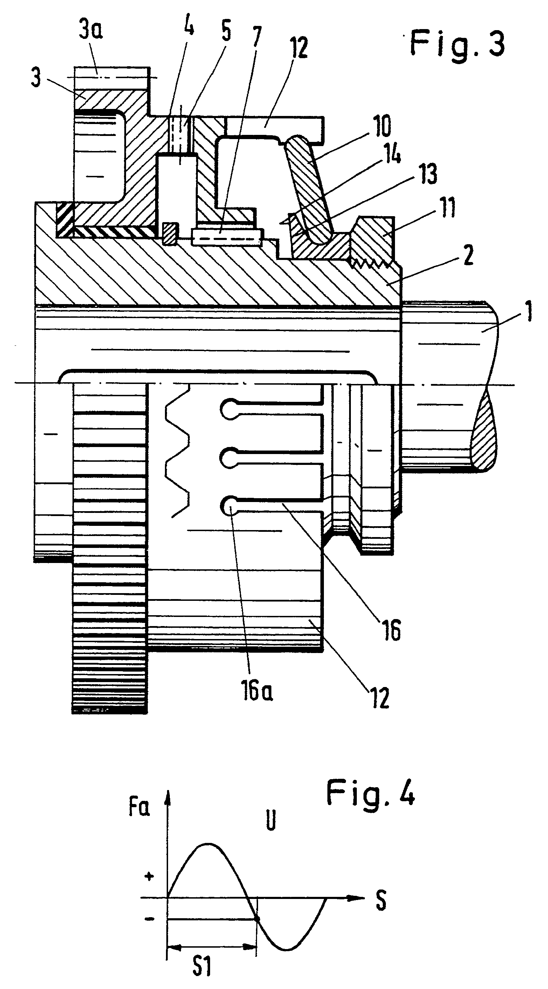

Figur 3 zeigt das zweite Ausführungsbeispiel der Erfindung. Während Teile mit gleichen Bezugsziffern denen des ersten Ausführungsbeispieles entsprechen, sind nach diesem Ausführungsbeispiel die andere Kupplungshälfte und der Ring der Federanordnung als einstückiges Teil 12 ausgebildet.

Innerhalb des Ringes 12 sind axial verlaufende Schlitze 16 vorgesehen, die von dem Ende des Ringes 12 ausgehen, welches der Planverzahnung 4, 5 entgegengesetzt ist. Die Schlitze 16 sind gleichmäßig über den Umfang des Ringes 12 verteilt und enden jeweils in einem kreisförmigen Bereich. Der Innenring 11 weist nach diesem Ausführungsbeispiel eine Schulter 14 auf, die mit einem Absatz 15 der anderen Kupplungshälfte zusammenwirkt. Wenn im Überlastfall die axial bewegliche Hälfte 12 der Kupplung von der einen Kupplungshälfte 3 weggedrückt wird, weiten, wie im ersten Ausführungsbeispiel, die Abstützelemente 10 den Außenring 12 auf. Wenn diese etwa senkrecht stehen, d.h. wenn der Umschnappunkt U auf der Federkennlinie in Figur 4 erreicht ist erfolgt der Übergang in die ausgerückte axiale Lage der anderen Kupplungshälfte. Die Axialbewegung nach dem "Umschnappen" der anderen Kupplungshälfte ist jedoch auf einen solchen Weg begrenzt, bis Schulter 14 und Absatz 15 zusammenstoßen. Dieser Weg S1, der im Diagramm in Figur 4 ebenfalls dargestellt ist, liegt bei dem gezeigten Ausführungsbeispiel wenig oberhalb des Umschnappunktes U der Federkennlinie. Hierdurch ist gewährleistet, daß die andere Kupplungshälfte zwar sicher ausrückt, jedoch mit einer vergleichsweise geringen Federkraft wieder eingeschaltet werden kann.

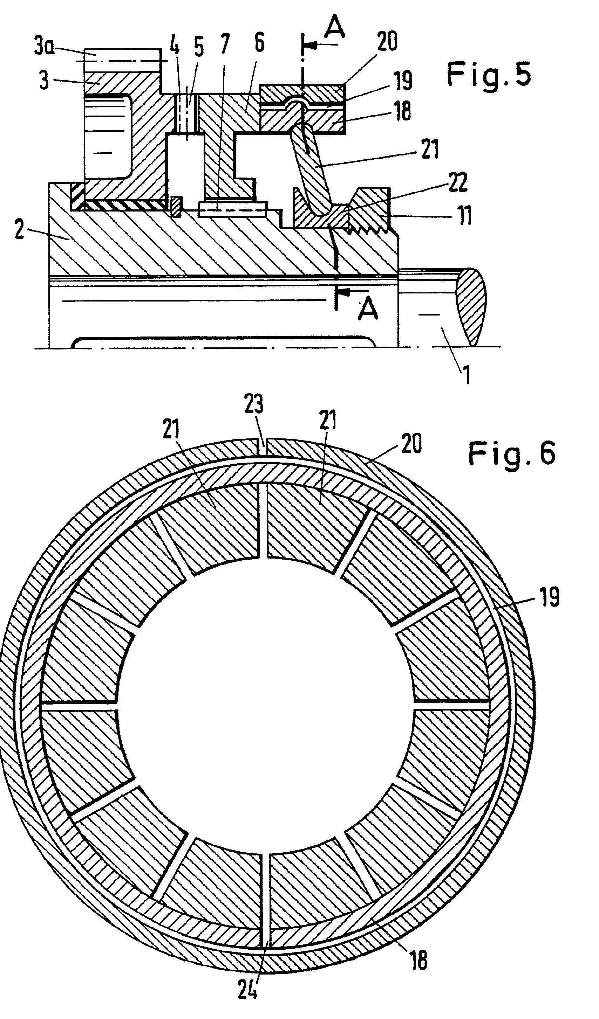

Das in Figur 5 dargestellte dritte Ausführungsbeispiel unterscheidet sich vom zweiten Ausführungsbeispiel dadurch, daß der Ring als zwei Teilringe 18, 20 ausgebildet ist, die zueinander konzentrisch sind und gegeneinander verdrehbar sind. Die Teilringe weisen dabei jeweils einen Schlitz 23 bzw. 24 auf, wobei die Schlitze 23, 24 umfangsmäßig bevorzugt 180 Grad zueinander versetzt sind. Im zwischen den Teilringen 20, 18 ausgebildeten Ringraum befindet sich ein Gleitmittel 19 in Form eines Kunststoffes. Die Abstützelemente 21 sind im wesentlichen wie die Abstützelemente 10 des ersten bzw. zweiten Ausführungsbeispiels ausgebildet. Im Überlastfall können sich beide Teilringe 18, 20 getrennt voneinander aufweiten, wobei durch die vorgesehene Kunststoffmasse die Reibung der einander zugeordneten Flächen der Teilringe 18, 20 herabgesetzt wird.

**Patentansprüche**

1. Freischaltsicherheitskupplung für die Übertragung von Drehbewegungen zwischen Wellen mit zwei von einer Nabe (2) getragenen axial ausrückbaren Kupplungshälften (3, 6), von denen eine Kupplungshälfte (6) drehstarr mit der Nabe (2) und eine Kupplungshälfte (3) axial fest mit der Nabe (2) verbunden sind, und mit einer auf die axial bewegliche Kupplungshälfte (6) einwirkenden Federanordnung (8, 10, 12, 18-21) mit Umschnappcharakteristik, die die axial bewegliche Kupplungshälfte (6) im eingerückten Zustand mit einer einstellbaren Axialkraft beaufschlagt, wobei die Federanordnung (8, 10, 12, 18-21) aus einem mit der axial beweglichen Kupplungshälfte (6) verbundenen konzentrischen Ring (8, 12, 18-20) und an diesem Ring (8, 12, 18-20) und der mit radialem Abstand innerhalb dieses Ringes (8, 12, 18-20) angeordneten Nabe (2,) gelenkig abgestützten und geneigt zur Axialebene der Kupplung angeordneten, radial gerichteten starren Abstützelementen (10, 21) besteht, **dadurch gekennzeichnet,** daß der Ring (8, 12, 18-20) derart federelastisch ist, daß (8, 12, 18-20) bei Beaufschlagung mit einer gegen die Neigungsrichtung der Abstützelemente (10, 21) gerichteten Axialkraft radial aufweitbar ist.

2. Sicherheitskupplung nach Anspruch 1, **dadurch gekennzeichnet,** daß der Ring (8, 12, 18-20) einstückig mit der anderen Kupplungshälfte (6) ausgebildet ist.

3. Sicherheitskupplung nach einem der Ansprüche 1 oder 2, **dadurch gekennzeichnet,** daß der Ring (18-20) mindestens einen von seinem der Verbindung (4, 5) abgewandten Ende ausgehenden axialen Schlitz (23, 24) aufweist.

4. Sicherheitskupplung nach einem der Ansprüche 1 bis 3, **dadurch gekennzeichnet,** daß der Ring (18, 20) aus zwei zueinander konzentrischen und gegeneinander verdrehbaren, jeweils einen axialen Schlitz (23, 24) aufweisenden Teilringen (18, 20) besteht, wobei die beiden Schlitze (23, 24) umfangsmäßig gegeneinander versetzt sind.

5. Sicherheitskupplung nach Anspruch 4, **dadurch gekennzeichnet,** daß sich die Schlitze (23, 24) der beiden Teilringe diametral gegenüberliegen.

6. Sicherheitskupplung nach Anspruch 5, **dadurch gekennzeichnet,** daß der zwischen den Teilringen (18, 20) ausgebildete Ringraum durch ein Gleitmittel (19), insbesondere aus Kunststoff, ausgefüllt ist.

7. Sicherheitskupplung nach einem der Ansprüche 1 bis 6, **dadurch gekennzeichnet,** daß die gelenkige Abstützung der Abstützelemente (10, 21) von einem auf der Nabe (2) angeordneten Innenring (9, 22) gebildet wird.

8. Sicherheitskupplung nach einem der Ansprüche 1 bis 6, **dadurch gekennzeichnet,** daß der Innenring (9) eine Schulter (14) aufweist, die mit einem Absatz (15) an der anderen Kupplungshälfte (6) derart zusammenwirkt, daß der maximal zulässige Ausrückweg der anderen Kupplungshälfte (6) zwischen dem Umschnappunkt (U) und der stabilen ausgerückten Endlage der anderen Kupplungshälfte (6) liegt.

## Claims

1. An overload release clutch for the transmission of rotary movements between shafts, having two axially disengageable clutch halves (3, 6) borne by a hub (2), one coupling half (6) being non-rotatably connected to the hub (2) and the other clutch half (3) being rigidly connected axially to the hub (2), a spring arrangement (8, 10, 12, 18-21) being provided which has a snap-over characteristic and which acts with an adjustable axial force on the axially movable clutch half (6) in the engaged state, the spring arrangement (8, 10, 12, 18-21) consisting of a concentric ring (8, 12, 18-20) connected to the axially movable clutch half (6), and radially directed rigid bearing elements (10, 21) which are pivotably borne at an inclination to the axial plane of the clutch on the ring and the hub (2) disposed at a radial distance inside the ring (8, 12, 18-20) characterized in that the ring is so resilient that, when acted upon with an axial force directed towards the direction of inclination of the bearing elements (10, 21), it can be radially expanded.

2. A clutch according to claim 1, characterized in that the ring (8, 12, 18-20) is unitary with the other clutch half (6).

3. A clutch according to one of claims 1 or 2, characterized in that the ring (18-20) is formed with at least one axial slot (23, 24) starting from its end remote from the connection (4, 5).

4. A clutch according to one of claims 1 to 3, characterized in that the ring (18, 20) consists of two component rings (18, 20) which are concentric with one another and can be rotated in relation to one another and each of which is formed with an axial slot (23, 24), the two slots (23, 24) being offset in relation to one another peripherally.

5. A clutch according to claim 4, characterized in that the slots (23, 24) of the two component rings are disposed diametrically opposite one another.

6. A clutch according to claim 5, characterized in that the annular space formed between the component rings (18, 20) is filled with a lubricant (19), more particularly of plastics.

7. A clutch according to one of claims 1 to 6, characterized in that the pivotable bearing of the bearing elements (10, 21) is formed by an inner ring (9, 22) disposed on the hub (2).

8. A clutch according to one of claims 1 to 6, characterized in that the inner ring (6) has a shoulder (14) which so cooperates with a step (15) on the other clutch half (6) that the maximum permissible disengagement travel of the other clutch half (6) lies between the snap-over point (U) and the stable disengaged end position of the other clutch half (6).


## Revendications

1. Embrayage automatique de sécurité pour la transmission de déplacements de rotation entre arbres, avec deux demi-accouplements (3, 6) portés par un moyeu (2) et débrayables axialement, parmi lesquels un demi-accouplement (6) est relié fixe en rotation au moyeu (2) et un demi-accouplement (6) fixé axialement au moyeu (2), et avec un ensemble à ressorts (8, 10, 12, 18-21) agissant sur le demi-accouplement (6) mobile axialement et ayant une caractéristique de passage brusque, qui charge le demi-accouplement (6) mobile axialement à l'état embrayé par une force axiale réglable, l'ensemble à ressorts (8, 10, 12, 18-21) étant constitué d'une bague (8, 12, 18-20) concentrique reliée au demi-accouplement (6) mobile axialement et d'éléments d'appui (10, 21) rigides dirigés axialement disposés sur cette bague (8, 12, 18-20) et s'appuyant à articulation, en étant inclinés par rapport au plan axial de l'accouplement, sur le moyeu (2) et disposés à écartement radial à l'intérieur de cette bague (8, 12, 18-20), caractérisé en ce que la bague (8, 12, 18-20) a une déformation élastique de telle manière que, lors d'une charge par une force axiale dirigée contre la direction d'inclinaison des éléments d'appui (10, 21), elle peut s'élargir radialement.

2. Embrayage automatique de sécurité selon la revendication 1, caractérisé en ce que la bague (8, 12, 18-20) est réalisée d'une seule pièce avec l'autre demi-accouplement (6).

3. Embrayage automatique de sécurité selon l'une des revendications 1 et 2, caractérisé en ce que la bague (18-20) présente au moins une fente axiale (23, 24) partant de son extrémité écartée de la liaison (4, 5).

4. Embrayage automatique de sécurité selon l'une des revendications 1 à 3, caractérisé en ce que la bague (18-20) est constituée de deux bagues partielles (18-20) concentriques l'une à l'autre et rotatives l'une par rapport à l'autre et présentant chacune une fente axiale (23, 24), les deux fentes (23, 24) étant décalées circonférentiellement l'une par rapport à l'autre.

5. Embrayage automatique de sécurité selon la revendication 4, caractérisé en ce que les fentes (23, 24) des deux bagues partielles sont diamétralement opposées.

6. Embrayage automatique de sécurité selon la revendication 5, caractérisé en ce que l'espace annulaire formé entre les bagues partielles (18-20) est rempli par un agent lubrifiant (19), en particulier en matière synthétique.

7. Embrayage automatique de sécurité selon l'une des revendications 1 à 6, caractérisé en ce que l'appui à articulation des éléments d'appui (10, 20) est formé par une bague interne (9, 22) disposée sur le moyeu (2).

8. Embrayage automatique de sécurité selon l'une des revendications 1 à 6, caractérisé en ce que la bague interne (9) présente un épaulement (14) qui coopère avec un gradin (15) de l'autre demi-accouplement (6) de telle manière que la course de débrayage maximale admissible de l'autre demi-accouplement (6) soit limitée à un point entre le point de passage brusque (U) et la position axiale stable débrayée de l'autre demi-accouplement (6).

Fig.1

Fig. 2

## Fig. 3

3a

3

4

5

7

12

10

14

13

11

2

1

16

16a

12

## Fig. 4

Fa

U

+

−

S

S1

Fig.5

Fig.6

9